# EUROPEAN PATENT SPECIFICATION

(11) **EP 3 155 248 B1**
(45) Date of publication and mention of the grant of the patent: **04.07.2018**
(21) Application number: 15731631.6
(22) Date of filing: 28.05.2015
(51) Int. Cl.: F02D 35/00, F01N 3/30, F01N 3/32, F01N 1/14

(54) **MONITORING SYSTEM FOR GAS ENGINE**
ÜBERWACHUNGSSYSTEM FÜR EINEN GASMOTOR
SYSTÈME DE SURVEILLANCE POUR MOTEUR À GAZ

(30) Priority: 13.06.2014 FI 20145553
(43) Date of publication of application: 19.04.2017
(73) Proprietor: Wärtsilä Finland Oy, 65380 Vaasa (FI)
(72) Inventor: TORRKULLA, Jan, FI-65100 Vaasa (FI); LÖVHOLM, Markus, FI-65100 Vaasa (FI); KORTELAINEN, Juha, FI-65100 Vaasa (FI)
(74) Representative: Berggren Oy, Helsinki & Oulu
(86) International application number: PCT/FI2015/050373
(87) International publication number: WO 2015/189463

(56) References cited:
- EP-A2- 2 161 569
- WO-A1-2005/047661
- WO-A1-2012/001222
- US-A1- 2009 151 425

## Description

### TECHNICAL FIELD

The present invention concerns a monitoring system for a gas engine, the engine is a reciprocating internal combustion engine using gas as fuel, the engine is connected to an outlet channel for conducting the exhaust gases out of the engine, there is a fan arranged in connection with the outlet channel for flushing the outlet channel with air in case of non-started engine and when there may be unburned fuel gas accumulated in the outlet channel.

In internal combustion reciprocating gas engines typically use as a fuel methane or other gas which is lighter than air. During the start up the gaseous fuel is fed to the cylinders. In normal case the fuel is fed to the cylinder, compressed and then the gas/air mixture ignites or is ignited and after burning, the burnt exhaust gas is removed from the cylinder during an exhaust stroke. If the ignition does not happen for some reason, the unburned fuel gas is removed during the following exhaust stroke to the exhaust gas system i.e. to the outlet channel. This non-starting of the engine, in other words when the engine has not started to run based on combustion of the fuel, may be due to several factors like too lean mixture, weak igniting device etc.. In gas engine installations, in case of an unsuccessful start, there is a risk that uncombusted fuel gas collects in the exhaust gas system. Further, this means that there is a risk that large amount of explosive fuel gas mixture is accumulated in the duct. If the engine is then started and the hot exhaust gas provides an ignition source, this may cause an explosion in the exhaust gas line. This may happen also in a case when an attempt for start is too long in duration, the exhaust outlet channel is at least partially filled with the explosive fuel gas mixture.

To eliminate the above explained risk gas engines are normally provided with a flushing system, which comprises a ventilation fan arranged in connection with the outlet channel. It is used for flushing the outlet channel with air in the case of non-started engine and wherein it is susceptible to have or may have unburned fuel gas accumulated in the outlet channel. The operator of the engine / power plant makes the decision on this matter and flushes the outlet channel as long as it is necessary. Normally this precautionary time is determined by the engine / plant provided.

As explained and in order to mitigate this risk, gas engine installations are equipped with a ventilation fan that is used to blow clean air into the outlet channel prior to a new start attempt. As this type of gas engines are typically used for reserve power purposes, relatively quick response to the power need is required and long flushing time is a disadvantage. An example is given by document WO2012/001222 A1.

### SUMMARY OF THE INVENTION

The objective of the present invention is to provide a monitoring system for a gas engine which monitoring system may shorten the precautionary flushing time of the outlet channel.

The challenge in the state of the art solutions is that there is no means on controlling if the ventilation has been adequate to empty the duct. Too short ventilation time means a risk of explosion and long ventilation times are problematic especially in installations where a rapid response to power demand is needed. Thus the rapid ventilation i.e. flush time of the outlet channel is to be achieved.

The present invention is characterized in that there is at least one NOx-sensor located in the outlet channel in a location where unburned fuel gas may accumulate. The present invention solves the problem and enables a short flush time. In addition the present system improves significantly the safety of the engine arrangement.

According to an embodiment of the present system the location where the sensor is located and where the unburned fuel gas may accumulate is a silencer, boiler, catalysator, heat recovery system, closed top curve of the outlet channel or corresponding. Thus the sensor location is selected such that there is possibility for fuel gas to collect in a pocket type location of the outlet channel. Naturally if the fuel gas used is heavier than air, for example propane or such, this needs to be the other way around - the sensor need to be located to a bottom closed bowl like position. In both cases preferably the location is also selected so that the volume of the pocket is to be taken in to account. Very small pocket is less important than a large pocket where a large amount of fuel gas can be collected.

According to a further embodiment the sensor is a NOx sensor capable of measuring NO and 02 concentration. The normal NOx sensor which is used for engine control functions is typically in such location, that it does not measure the accumulating gas in a pocket. Here the sensor may be just similar to the engine control sensor but located differently. Due to the high temperature of the combustion environment only certain types of materials can operate in such location. The majority of commercially available NOx sensors developed have been made out of ceramic type metal oxides with the most common being yttria-stabilized zirconia (YSZ), which is currently used also in oxygen sensors. The YSZ is compacted into a dense ceramic and actually conducts oxygen ions (02-) at the high temperatures of an outlet channel such at 400°C and above. Also according to an embodiment the sensor is a dual sensor arrangement wherein there are at least two sensors, one NOx sensor capable of measuring concentration NO and other sensor capable of measuring 02 concentration.

Further according to an embodiment of the invention the system is configured to perform a check procedure after an unsuccessful start attempt. During the check procedure the sensor is detecting or measuring the content of oxygen and NO in that sensor location. Then, based on the measurement, the system is arranged to distinguish between at least three possible states based on measured O₂ and NO concentrations, wherein said at least three states comprise
- a first state indicating that the outlet channel has not been ventilated but that no risk of explosion in the outlet channel exist,
- a second state indicating that the outlet channel has not been ventilated and a risk of explosion in the outlet channel exists, and
- a third state indicating that the outlet channel has been adequately ventilated.

### DETAILLED DESCRIPTION

In the following the present invention is described in more detail in reference to the following figures wherein,
- Fig. 1 presents a general overview of the system,
- Fig 2 presents an embodiment of the check procedure.

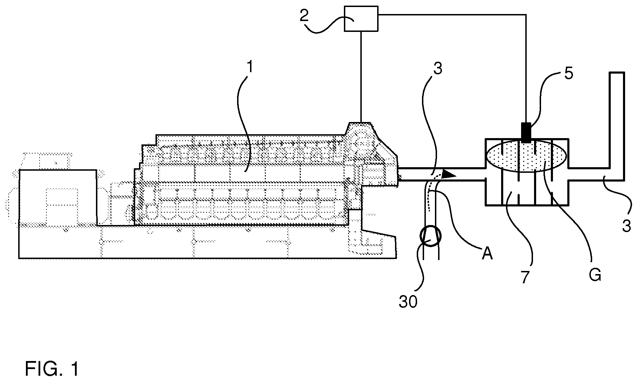

In fig. 1 it is presented an engine 1 arrangement comprising the monitoring system 2 for a gas engine 1, the engine 1 is a reciprocating internal combustion engine 1 using gas as fuel, the engine 1 is connected to an outlet channel 3 for conducting the exhaust gases out of the engine 1, there is a fan 30 arranged in connection with the outlet channel 3 for flushing the outlet channel with air A in case of non-started engine, in other words when the engine has not started to run based on combustion of fuel, and there may be unburned fuel gas G accumulated in the outlet channel 3. There is at least one NOx-sensor 5 located in the outlet channel 3 in a location where unburned fuel gas G may accumulate. The location where the sensor 5 is located and where the unburned fuel gas G may accumulate may be for instance a silencer 7 as shown in fig. 1, but it can be also a boiler, a catalyser, a heat recovery system, some kind of closed top curve of the outlet channel or corresponding.

The sensor 5 arrangement is preferably such that the sensor 5 is a NOx sensor capable of measuring NO and O₂ concentration. There are certain requirements for the sensor 5, it needs to be accurate enough to be able to measure relatively accurately the content of gas inside the outlet channel in different temperatures. It also needs to be durable to withhold the hot exhaust gas environment. The sensor can also be a dual sensor arrangement wherein there are at least two sensors, one NOx sensor capable of measuring NO concentration and other sensor capable of measuring O₂ concentration. However, the selection of specific sensor 5 for this purpose is otherwise like normal sensor selection where the properties can be specified.

According to an embodiment of the invention, the present system can be integrated with an engine main control system. It can be partially or fully integrated to the engine main control system or it can be arranged as a stand-alone system. The sensor 5 of the system measures the content of NO and 02 and the engine main control system or auxiliary control system reads the values and uses the data as following. The system is arranged to distinguish between at least three possible states based on measured O₂ and NO concentrations, wherein said at least three states comprise
- a first state indicating that the outlet channel has not been ventilated but that no risk of explosion in the outlet channel exist,
- a second state indicating that the outlet channel has not been ventilated and a risk of explosion in the outlet channel exists, and
- a third state indicating that the outlet channel has been adequately ventilated.

In more detail, the system is arranged to
- detect the first state in response to the O₂ concentration being lower than a low O₂ threshold and the NO concentration exceeding a high NO threshold,
- detect the second state in response to the O₂ concentration being within a predetermined range and the NO concentration being lower than a low NO threshold,
- detect the third state in response to the O₂ concentration exceeding a high O₂ threshold. Here that said predetermined range is a range from 18 % to 20 %.

According to an embodiment, the monitoring system can be set as following:
- the low O₂ threshold is a threshold within a range from A % to B %,
- the high O₂ threshold a threshold within a range from C % to D %
- the low NO threshold a threshold within a range from X % to Y %
- the high NO threshold is a threshold within a range from Z % to W % The exact values of A, B, C, D, X, Y, Z and W depends on different things such as the actual gas composition, ambient air humidity and corresponding factors.

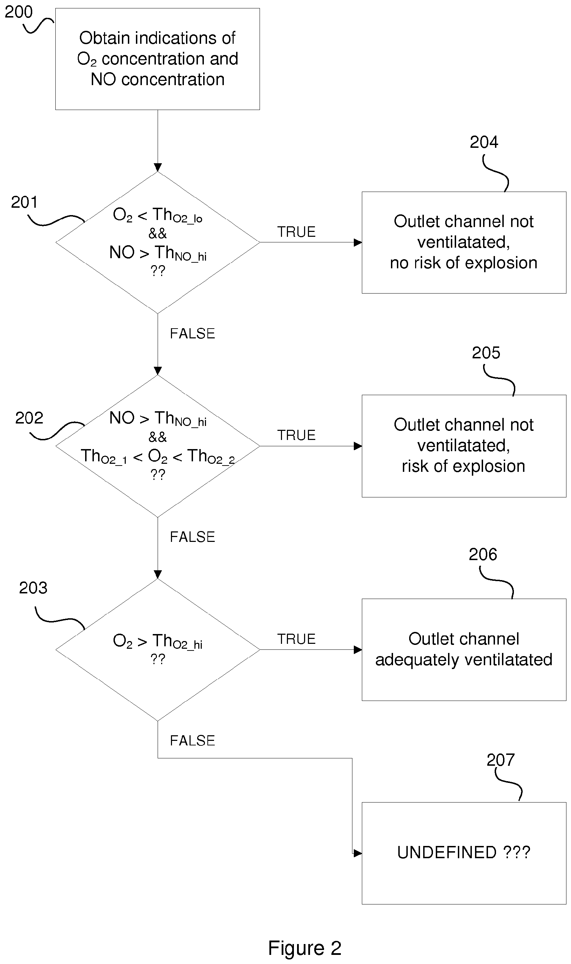

In fig 2 an embodiment of the above described procedure is presented in a flowchart form. The procedure can be conducted also in many different forms and the order of steps does not need as presented in the following, this is only one of the options. The basic idea is to obtain indications of O2 concentration and NO concentration, as presented in block 200. In a block 201 the first comparison check is done. If the measured O2 concentration is lower than the low O₂ threshold and measured NO concentration is higher than the high NO threshold, the block criteria is TRUE, then move to block 204. As the block criteria is fulfilled, the measured content corresponds to burnt exhaust gas. Thus it can be concluded that the outlet channel 3 is not ventilated, but there are no risk for explosion. Then for instance an approval for new start attempt can be given. If the block 201 results FALSE, then continue to block 202.

In block 202 it is checked if measured NO concentration is more than the high NO threshold and O₂ concentration is between predetermined range Th_{O2_1} < O₂ < Th_{O2_2}. If the block criteria is true, then move to block 205. As the block criteria is fulfilled, the measured content corresponds to unburnt fuel gas / oxygen mixture. Thus it can be concluded that the outlet channel 3 is not ventilated, but there is risk for explosion. Then for instance an approval for new start attempt cannot be given and a flushing action should be completed. If the block 202 results FALSE, then continue to block 203.

In block 203 it is checked if O₂ concentration is more than the high O₂ threshold. If TRUE, then move to block 206. As the block 203 criteria is fulfilled, the measured content corresponds to normal air. Thus it can be concluded that the outlet channel 3 is properly ventilated and there are no risk for explosion. Then for instance an approval for new start attempt can be given. If the block 203 value is FALSE, the status is undefined in respect of the danger for explosion.

As the previously described embodiments present only some of the options, especially the flow chart can be arranged to be performed in various orders, the above explained is only one example. Thus as evident to those skilled in the art, the invention and its embodiments are not limited to the above-described embodiment examples. Expressions representing the existence of characteristics are non-restrictive such that the description of characteristics does not exclude or prerequisite the existence of such other characteristics which are not presented in the independent or dependent claims.

## Claims

1. A monitoring system (2) for a gas engine (1), the engine (1) is a reciprocating internal combustion engine using gas as fuel, the engine (1) is connected to an outlet channel (3) for conducting the exhaust gases out of the engine (1), there is a fan (30) arranged in connection with the outlet channel (3) for flushing the outlet channel (3) with air (A) in case of non-started engine (1) and when there may be unburned fuel gas (G) accumulated in the outlet channel (3), **characterized in that** there is at least one NOx-sensor (5) located in the outlet channel (3) in a location where unburned fuel gas (G) may accumulate.

2. The monitoring system (2) according to claim 1 **characterized in that** the location where the sensor (5) is located and where the unburned fuel gas (G) may accumulate is a silencer (7), boiler, catalysator, heat recovery system, closed top curve of the outlet channel or corresponding.

3. The monitoring system (2) according to claim 1 **characterized in that** the sensor (5) is a NOx sensor capable of measuring NO and O₂ concentration.

4. The monitoring system (2) according to claim 1 **characterized in that** the sensor (5) is a dual sensor arrangement wherein there are at least two sensors, one NOx sensor capable of measuring NO concentration and other sensor capable of measuring O₂ concentration.

5. The monitoring system (2) according to claim 1 **characterized in that** the monitoring system (2) is integrated with an engine main control system, it can be partially or fully integrated to the engine main control system or it can be arranged as a stand-alone system

6. The monitoring system (2) according to claim 1 **characterized in that** the system (2) is configured to perform a check procedure after an unsuccessful start attempt.

7. The monitoring system (2) according to claim 6 **characterized in that** during the check procedure the sensor (5) is arranged to detect the O₂ concentration and NO concentration **in that** sensor (5) location.

8. The monitoring system (1) according to any of the preceeding claims **characterized in that** the monitoring system (2) is arranged to distinguish between at least three possible states based on measured O₂ and NO concentrations, wherein said at least three states comprise
- a first state indicating that the outlet channel (3) has not been ventilated but that no risk of explosion in the outlet channel (3) exist,
- a second state indicating that the outlet channel (3) has not been ventilated and a risk of explosion in the outlet channel exists (3), and
- a third state indicating that the outlet channel (3) has been adequately ventilated.

9. The monitoring system (2) according to claim 8 **characterized in that** the monitoring system (2) is arranged to
- detect the first state in response to the O₂ concentration being lower than a low O₂ threshold and the NO concentration exceeding a high NO threshold
- detect the second state in response to the O₂ concentration being within a predetermined range and the NO concentration being lower than a low NO threshold,
- detect the third state in response to the O₂ concentration exceeding a high O₂ threshold.

10. The monitoring system according to claim 9 **characterized in that** said predetermined range is a range from 18 % to 20 %.

## Patentansprüche

1. Überwachungssystem (2) für einen Gasmotor (1), wobei der Motor (1) ein Hubkolben-Verbrennungsmotor ist, der Gas als Kraftstoff verwendet, wobei der Motor (1) mit einem Auslasskanal (3) zum Ableiten der Abgase aus dem Motor (1) verbunden ist, wobei ein Gebläse (30) in Verbindung mit dem Auslasskanal (3) angeordnet ist, um den Auslasskanal (3) bei einem nichtgestarteten Motor (1) und wenn nichtverbranntes Kraftstoffgas (G) in dem Auslasskanal (3) akkumuliert sein könnte, mit Luft (A) auszuspülen, **dadurch gekennzeichnet, dass** wenigstens ein NOx-Sensor (5) in dem Auslasskanal (3) an einer Stelle, an der sich nichtverbranntes Kraftstoffgas (G) akkumulieren kann, angeordnet ist.

2. Überwachungssystem (2) gemäß Anspruch 1, **dadurch gekennzeichnet, dass** die Stelle, an der der Sensor (5) angeordnet ist und an der sich das nichtverbrannte Kraftstoffgas (G) akkumulieren kann, ein Auspufftopf (7), Heizkessel, Katalysator, Wärmegewinnungssystem, eine geschlossene obere Krümmung des Auslasskanals oder Entsprechendes ist.

3. Überwachungssystem (2) gemäß Anspruch 1, **dadurch gekennzeichnet, dass** der Sensor (5) ein NOx-Sensor ist, der fähig ist, NO- und O₂-Konzentrationen zu messen.

4. Überwachungssystem (2) gemäß Anspruch 1, **dadurch gekennzeichnet, dass** der Sensor (5) eine duale Sensorbaugruppe ist, bei der wenigstens zwei Sensoren vorhanden sind, ein NOx-Sensor, der zum Messen einer NO-Konzentration fähig ist, und ein anderer Sensor, der zum Messen einer O₂-Konzentration fähig ist.

5. Überwachungssystem (2) gemäß Anspruch 1, **dadurch gekennzeichnet, dass** das Überwachungssystem (2) mit einem Motorhauptsteuersystem integriert ist, wobei es teilweise oder vollständig in das Motorhauptsteuersystem integriert sein kann oder als alleinstehendes System angeordnet sein kann.

6. Überwachungssystem (2) gemäß Anspruch 1, **dadurch gekennzeichnet, dass** das System (2) dafür gestaltet ist, nach einem erfolglosen Startversuch ein Prüfverfahren durchzuführen.

7. Überwachungssystem (2) gemäß Anspruch 6, **dadurch gekennzeichnet, dass** während des Prüfverfahrens der Sensor (5) dafür angeordnet ist, die O₂-Konzentration und die NO-Konzentration an der Stelle des Sensors (5) zu erfassen.

8. Überwachungssystem (2) gemäß einem der vorstehenden Ansprüche, **dadurch gekennzeichnet, dass** das Überwachungssystem (2) dafür gestaltet ist, zwischen wenigstens drei möglichen Zuständen auf der Grundlage von gemessenen O₂- und NO-Konzentrationen zu unterscheiden, wobei die wenigstens drei Zustände umfassen:
- einen ersten Zustand, der anzeigt, dass der Auslasskanal (3) nicht belüftet worden ist, dass aber kein Explosionsrisiko in dem Auslasskanal (3) besteht,
- einen zweiten Zustand, der anzeigt, dass der Auslasskanal (3) nicht belüftet worden ist und dass ein Explosionsrisiko in dem Auslasskanal (3) besteht und
- einen dritten Zustand, der anzeigt, dass der Auslasskanal (3) ausreichend belüftet worden ist.

9. Überwachungssystem (2) gemäß Anspruch 8, **dadurch gekennzeichnet, dass** das Überwachungssystem (2) dafür gestaltet ist,
- den ersten Zustand in Antwort darauf nachzuweisen, dass die O₂-Konzentration niedriger als ein unterer O₂-Grenzwert ist und die NO-Konzentration einen oberen NO-Grenzwert übersteigt,
- den zweiten Zustand in Antwort darauf nachzuweisen, dass die O₂-Konzentration in einem vorbestimmten Bereich liegt und die NO-Konzentration niedriger als ein unterer NO-Grenzwert ist,
- den dritten Zustand in Antwort darauf nachzuweisen, dass die O₂-Konzentration einen oberen O₂-Grenzwert übersteigt.

10. Überwachungssystem (2) gemäß Anspruch 9, **dadurch gekennzeichnet, dass** der vorbestimmte Bereich ein Bereich von 18 % bis 20 % ist.

## Revendications

1. Système de surveillance (2) pour un moteur à gaz (1), le moteur (1) est un moteur alternatif à combustion interne utilisant du gaz en tant que combustible, le moteur (1) est raccordé à un canal de sortie (3) pour conduire les gaz d'échappement hors du moteur (1), il y a un ventilateur (30) agencé en association avec le canal de sortie (3) pour purger le canal de sortie (3) avec de l'air (A) en cas de moteur non démarré (1) et lorsqu'il peut y avoir un gaz combustible non brûlé (G) accumulé dans le canal de sortie (3), **caractérisé en ce qu'**il y a au moins un capteur de NOx (5) situé dans le canal de sortie (3) à un emplacement où le gaz combustible non brûlé (G) peut s'accumuler.

2. Système de surveillance (2) selon la revendication 1, **caractérisé en ce que** l'emplacement où le capteur (5) est situé et où le gaz combustible non brûlé (G) peut s'accumuler est un pot d'échappement (7), une chaudière, un catalyseur, un système de récupération de chaleur, un coude supérieur fermé du canal de sortie ou un élément correspondant.

3. Système de surveillance (2) selon la revendication 1, **caractérisé en ce que** le capteur (5) est un capteur de NOx capable de mesurer la concentration en NO et en O₂.

4. Système de surveillance (2) selon la revendication 1, **caractérisé en ce que** le capteur (5) est un agencement à double capteur dans lequel il y a au moins deux capteurs, un capteur de NOx capable de mesurer en concentration en NO et un autre capteur capable de mesurer la concentration en O₂.

5. Système de surveillance (2) selon la revendication 1, **caractérisé en ce que** le système de surveillance (2) est intégré avec un système de commande principal de moteur, il peut être partiellement ou complètement intégré avec le système de commande principal de moteur ou il peut être agencé sous forme de système autonome.

6. Système de surveillance (2) selon la revendication 1, **caractérisé en ce que** le système (2) est configuré pour réaliser une procédure de contrôle après une tentative de démarrage non réussie.

7. Système de surveillance (2) selon la revendication 6, **caractérisé en ce que**, durant la procédure de contrôle, le capteur (5) est agencé pour détecter la concentration en O₂ et la concentration en NO à l'emplacement de ce capteur (5).

8. Système de surveillance (1) selon l'une quelconque des revendications précédentes, **caractérisé en ce que** le système de surveillance (2) est agencé pour distinguer entre au moins trois possible états sur la base de concentrations en O₂ et NO mesurées, dans lequel lesdits au moins trois états comprennent
- un premier état indiquant que le canal de sortie (3) n'a pas été ventilé mais qu'aucun risque d'explosion dans le canal de sortie (3) n'existe,
- un deuxième état indiquant que le canal de sortie (3) n'a pas été ventilé et qu'un risque d'explosion dans le canal de sortie (3) existe, et
- un troisième état indiquant que le canal de sortie (3) a été ventilé de façon adéquate.

9. Système de surveillance (2) selon la revendication 8, **caractérisé en ce que** le système de surveillance (2) est agencé pour
- détecter le premier état en réponse aux faits que la concentration en O₂ est inférieure à un bas seuil d'O₂ et que la concentration en NO excède un haut seuil de NO,
- détecter le deuxième état en réponse aux faits que la concentration en O₂ est au sein d'une plage prédéterminée et que la concentration en NO est inférieure à un bas seuil de NO,
- détecter le troisième état en réponse au fait que la concentration en O₂ excède un haut seuil de O₂.

10. Système de surveillance selon la revendication 9 **caractérisé en ce que** ladite plage prédéterminée est une plage de 18 % à 20 %.
